# EUROPÄISCHE PATENTSCHRIFT

(11) **EP 2 785 235 B1**
(45) Veröffentlichungstag und Bekanntmachung des Hinweises auf die Patenterteilung: **24.05.2023**
(21) Anmeldenummer: 12795768.6
(22) Anmeldetag: 21.11.2012
(51) Int. Cl.: F25D 29/00, A47L 15/42, F24C 7/08, A47L 15/00

(54) **HAUSGERÄT MIT DIREKTER ERKENNUNG DES ZU BEHANDELNDEN GUTES IN BEZUG AUF EINE AUSFÜHRUNG VON ERFORDERLICHEN BEHANDLUNGSCHRITTEN**
HOUSEHOLD APPLIANCE HAVING DIRECT RECOGNITION OF THE PRODUCT TO BE HANDLED IN RESPECT OF EXECUTING REQUIRED HANDLING STEPS
APPAREIL MÉNAGER À DÉTECTION DIRECTE DE L'ARTICLE À TRAITER CONCERNANT UNE MISE EN OELIGUVRE DES ÉTAPES DE TRAITEMENT NÉCESSAIRES

(30) Priorität: 29.11.2011 DE 102011087274
(43) Veröffentlichungstag der Anmeldung: 08.10.2014
(73) Patentinhaber: BSH Hausgeräte GmbH, 81739 München (DE)
(72) Erfinder: CLEMENS Kay-Uwe, 83527 Haag in Oberbayern (DE); PIETSCH, Ingo, 81829 München (DE)
(86) Internationale Anmeldenummer: PCT/EP2012/073235
(87) Internationale Veröffentlichungsnummer: WO 2013/079380

(56) Entgegenhaltungen:
- DE-A1- 19 547 736
- DE-A1- 19 855 503
- DE-B4- 19 855 503
- JP-A- 2006 145 142
- US-A1- 2001 049 846

## Beschreibung

Die Erfindung bezieht sich auf ein Hausgerät für Behandlung eines Behandlungsguts, wobei das Hausgerät eine Steuerung zur Ausführung aller erforderlichen Behandlungsschritte zur Erreichung eines bestimmungsgemäßen Behandlungserfolges in Bezug auf das Behandlungsgut aufweist. Ferner bezieht sich die Erfindung auf ein zugehöriges Verfahren.

Hausgeräte in derzeit üblicher Ausbildung, wie Waschmaschinen, Waschtrockner, Wäschetrockner, Geschirrspülmaschinen, Gargeräte, in besonderer Ausbildung als Backöfen oder Herde sowie Kühlschränke und dgl. verfügen über eine Vielzahl von Funktionen, die den Nutzern dieser Hausgeräte die Bedienung zunehmend erschweren, obwohl bedienungsfreundliche und gestalterisch ansprechende Eingabeoberflächen bzw. Bedienblenden mit Displays, besonderen Tasten, wie Displaytasten und dgl. geschaffen wurden. Es könnte sich als Ausweg anbieten, eine Automatisierung, mindestens Teilautomatisierung der Behandlungsabläufe in diesen Hausgeräten anzustreben, ohne dass eine Bedienungsperson über eine Starttaste hinausgehend unterschiedliche viele Eingaben auszulösen hat.

Es ist bekannt, dass bei Backöfen, abhängig von den zu zubereitenden Lebensmitteln abgestimmte Abläufe von Betriebsarten, wie Ober- und Unterhitze, Heißluft, Grill, Mikrowelle, bei zugeordneter Temperatur und Dauer vorgesehen werden können, wobei Art und Menge des zuzubereitenden Lebensmittels berücksichtigt werden können.

Ferner ist es bekannt, bei Waschmaschinen und Wäschetrocknern Programmabläufe zu berücksichtigen, die der jeweiligen Füllmenge, der Art der Wäsche und dem Verschmutzungsgrad bzw. der Restfeuchte angepasst sind.

Bei Kühlschränken können beispielsweise durch eine intelligente Steuerung Informationen über die Lagerung von Lebensmitteln bereit gestellt werden, wenn das jeweilig zu lagernde Lebensmittel als solches bekannt ist.

Eine Bedienungsperson hat bei den derzeit üblicherweise ausgebildeten und marktgängigen Hausgeräten die Art des Behandlungsgutes, wie die Art der Wäsche oder die Art des Lebensmittels selektiv einzugeben und dabei noch über zahlreiche alternative Behandlungsmethoden durch manuell auszuführende Eingaben an der Bedienblende des Hausgerätes zu entscheiden, bevor das Hausgerät gestartet wird. Dies kann im Einzelfall als sehr aufwändig angesehen werden und führt schlimmstenfalls dazu, dass die Nutzungsbarriere für eine Bedienungsperson für eine komplexe Eingabe bei einem mit sehr fortschrittlicher Technologie versehenen Hausgerät so hoch liegt, dass deren Anwendung unterbleibt, obwohl damit bei dem entsprechenden Hausgerät bessere Behandlungsergebnisse in Bezug auf das jeweilige Behandlungsgut erreicht würden.

Es sind auch schon Hausgeräte geschaffen worden, bei denen durch Sensoren der Bedienungsperson die Eingabe einzelner Informationen über das Behandlungsgut abgenommen wird. So ist schon berücksichtigt worden, dass sich das Gewicht von Lebensmitteln oder von Wäsche mit einer relativ einfachen Sensorik, wie Dehnungsmessstreifen erfassen lässt. Ebenso kann auch alleinig die Masse des Behandlungsguts relativ einfach ermittelt werden, indem die Lageveränderung eines Behältnisses für das Behandlungsgut, wie bei einer federnd aufgehängten Trommel, z. B. einer Waschmaschine, wenn die Wäsche insgesamt eingebracht ist. Alle diese vom Ansatz her richtigen, aber letztlich doch nicht als umfassend anzusehenden Maßnahmen, machen es dennoch ergänzend erforderlich, dass zusätzliche manuelle Eingaben durch die Bedienungsperson erfolgen müssen, die möglicherweise auch als zu komplex angesehen werden, so dass das Problem der schon problematisierten Nutzungsbarriere weiterhin besteht.

Durch die DE 41 42 463 A1 ist ein Hausgerät für eine automatische Behandlung eines Behandlungsguts bekannt, bei dem beim Einbringen des Behandlungsgutes durch die Beschickungstür des Hausgerätes über einen Eingabe-Steuerungsteil mit zum Beispiel einem Sensor das Behandlungsgut erkannt wird. Es ist jedoch erforderlich, dass jedes einzelne Teil einer Gesamtmenge, die als Behandlungsgut zu betrachten ist, mit einer maschinenlesbaren Marke bzw. Codemarke versehen werden muss. Bei einer Waschmaschine als Hausgerät muss also jedes Wäscheteil, wie Hemd, eine solche Codemarke aufweisen. Bei einem Gargerät, muss das zuzubereitende Lebensmittel, wie ein im Handel gekauftes Hähnchen, mit einer solchen Codemarke versehen sein. Bei einer Geschirrspülmaschine als Hausgerät muss jedes Geschirrteil, wie Glas oder Kochtopf mit einer solchen Codemarke versehen sein. Obwohl mit dem Hausgerät nach der DE 41 42 463 A1 ein vollautomatischer Ablauf eines Programms mit diversen Behandlungsschritten zur Erreichung eines bestimmungsgemäßen Behandlungserfolges möglich ist, wird es als sehr hinderlich angesehen, dass alle Teile der Gesamtmenge, die als Behandlungsgut anzusehen ist, mit einer Codemarke versehen werden müssen.

Auch bei der DE 198 10 907 C2, die eine Erfassungsvorrichtung für Wäschestücke zur Reinigung in einer Waschmaschine betrifft, ist es erforderlich, dass jedes Wäschestück eine elektronische Markierung aufweisen muss, die für sich gesehen als Sende/ Empfangseinrichtung ausgebildet ist und für den Erfassungsvorgang sowie für die nachfolgende Steuerung der Waschmaschine günstige Eigenschaften aufzuweisen verspricht.

Bei dem Hausgerät nach der DE 10 2007 048 834 A1 ist vorgesehen, dass eine Kamera eingesetzt wird, in deren Bildbereich sich das Behandlungsgut, wie Lebensmittel befindet. Damit kann ein bereits durch eine Bedienungsperson am Hausgerät ausgewählter und eingeleiteter Behandlungsvorgang im seinem weiteren Verlauf besonders günstig beeinflusst werden. Es ist jedoch auch möglich, dass der Bedienungsperson interaktive Möglichkeiten zur Verfügung gestellt werden, um im Laufe eines Prozesses eingreifen zu können.

Aus der DE 198 55 503 A1 ist eine Wäschebehandlungsmaschine vorbekannt, die die Art von Wäschestücken mithilfe eines Spektrometers maschinell identifizieren kann. Die DE 195 47 736 A1 offenbart ein Programmauswahlsystem für Bearbeitungsmaschinen mit einem Sensor, der eine Oberflächeneigenschaft einer zu bearbeitenden Ware erfasst. Die JP 2006 145 142 A beschreibt eine Mikrowelle, die automatisch ihre Betriebszeit basierend auf dem Garobjekt einstellt. Die US 2001 / 049 846 A1 befasst sich mit einem Verfahren und einem System zur Leistungsoptimierung für ein Konsumgerät. Insbesondere offenbart die US 2001 / 049 846 A1 die Merkmale des Oberbegriffs von Anspruch 1.

Demgegenüber besteht die Aufgabe der Erfindung darin, ein Hausgerät anzugeben, das ein Behandlungsgut, das in dieses Hausgerät eingebracht wird, umfassend erkennt, so dass erforderliche Behandlungsschritte ausführbar sind, ohne dass weitere Vorkehrungen an dem Behandlungsgut zu treffen sind. Insbesondere soll es nicht nötig sein, dass das Behandlungsgut oder Teile desselben eine Kodierung aufweisen müssen.

Ferner besteht die Aufgabe der Erfindung darin, ein Verfahren zum Betreiben eines Hausgerätes nach der Erfindung anzugeben.

Die Aufgabe der Erfindung wird durch die Gesamtheit der im unabhängigen Anspruch angegebenen und auf ein Hausgerät gerichteten Merkmale gelöst und durch die auf diesen Anspruch rückbezogenen, abhängigen Ansprüche weitergebildet.

Entsprechendes gilt für die im weiteren, unabhängigen Anspruch angegebenen und auf ein Verfahren gerichteten Merkmale, die dann durch die auf diesen Anspruch rückbezogenen, abhängigen Ansprüche weitergebildet werden.

Die Erfindung betrifft also ein Hausgerät für Behandlung eines Behandlungsguts, wobei das Hausgerät eine Steuerung zur Ausführung aller erforderlichen Behandlungsschritte zur Erreichung eines bestimmungsgemäßen Behandlungserfolges in Bezug auf das Behandlungsgut aufweist, wobei beim Einbringen des Behandlungsgutes in das Hausgerät über einen Eingabe-Steuerungsteil Informationen über das Behandlungsgut in die Steuerung des Hausgerätes einlesbar sind, wobei über den Eingabe-Steuerungsteil das Behandlungsgut als solches Gattungs- und Zustands- bezogen erkannt wird, sowie dass die Steuerung des Hausgerätes einen Basis-Steuerungsteil und einen rechnerartigen Ergänzungs-Steuerungsteil aufweist, mit der Maßgabe, dass die Steuerung mit deren Steuerungsteilen bewirkt, dass in Bezug auf das erkannte Behandlungsgut die erforderlichen Behandlungsschritte selbsttätig ausführbar sind.

Nach der Erfindung ist es nunmehr möglich, ohne dass Teile oder Komponenten des Behandlungsgutes mit einer Kode-Marke oder einer Markierung, die Daten über das Behandlungsgut enthält, versehen sind, einen selbsttätig ablaufenden Behandlungsprozess des Behandlungsgutes mit den dazu erforderlichen Behandlungsschritten ausführen zu können. Der Eingabe-Steuerungsteil ist so ausgeführt, dass das Behandlungsgut nach seiner Art bzw. Gattung und von der Dimension her erkannt wird. Ferner wird die Oberfläche des Behandlungsgutes so genau analysiert, dass, wenn es sich zum Beispiel bei dem Behandlungsgut um Wäsche handelt, der Verschmutzungsgrad wie auch die Textilart, wie Baumwolle oder Seide oder dgl. erkannt wird. Ferner kann auch, falls es bei dem Hausgerät um einen Wäschetrockner handelt, die relative Feuchtigkeit der eingebrachten Wäschestücke erkannt werden, wobei fallweise auch noch ergänzende Messmethoden nach Start des Behandlungsvorganges hinzutreten können.

Es ist dem Grunde nach möglich, dass der Behandlungsvorgang vollkommen automatisch abläuft, wenn insbesondere der Behandlungsvorgang, nachdem das Behandlungsgut in das Hausgerät eingebracht ist, gestartet wird.

In praktischer Hinsicht ist es jedoch meist genügend, wenn der Behandlungsvorgang im Hausgerät teilautomatisch abläuft.

Dann werden der Bedienungsperson, bevor sie über die Starttaste den Behandlungsprozess auslöst, eine Reihe von leicht erfassbaren bzw. verständlichen Vorschlägen über mögliche Programmalternativen unterbreitet. Dies kann über als Displays ausgestaltete Anzeigen einer Bedienblende des Hausgerätes erfolgen, die wie eine Benutzerschnittstelle aufzufassen ist. Als Eingabemittel können Tasten der Bedienblende zum Einsatz gelangen, wobei auch Displaytasten, deren momentane Funktion über das Display angezeigt werden, sich als vorteilhaft erweisen können. Weiter ist auch zu bevorzugen, wenn Eingaben über die Oberfläche des Displays durch Berührung von verständlich gestalteten Feldern des Displays, als so genannte Touchfunktionen, erfolgen. Darüber hinaus erweist sich auch eine Spracheingabe als sehr komfortabel. Wenn nachfolgend noch darauf abgehoben wird, dass der Eingabe-Steuerungsteil ein vom Hausgerät getrenntes Gerät bzw. Device sein kann, so soll bereits hier darauf verwiesen werden, dass das getrennte Gerät auch dazu geeignet ist und dementsprechend ausgebildet ist, Eingaben für das Hausgerät ausführen zu können.

Es hat sich gezeigt, dass der rechnerartige Ergänzungs-Steuerungsteil, was die Rechengeschwindigkeit und den Aufwand an Speicherplätzen anbetrifft, gewissen Grenzen unterliegt, wenn dessen Zuordnung zu dem eigentlichen Hausgerät erfolgt. Es hat sich daher als besonders zweckmäßig herausgestellt, wenn der rechnerartige Ergänzungs-Steuerungsteil sich außerhalb des Hausgerätes befindet. Dabei ist es besonders bevorzugt, wenn ein über das Internet ankoppelbarer Server Verwendung findet. Daher wird erfindungsgemäß der rechnerartige Ergänzungs-Steuerungsteil durch einen über das Internet ankoppelbaren Server realisiert. Eine Ankopplung an das Internet kann über ein beliebiges physikalisches Übertragungsprinzip und ein darauf aufbauendes Protokoll erfolgen. Ausgehend von einem Router bzw. Gateway wird die Verbindung zum Internet hergestellt.

Der Eingabe-Steuerungsteil kann alternativ zu einer festen Anbringung in Bezug auf das Hausgerät, also letztlich einem Einbau im Hausgerät im Bereich der Beschickungstür des Hausgerätes, auch in einem externen Gerät erfolgen. Das externe Gerät muss dann lediglich, um seine Funktion für das in Rede stehende Hausgerät ausführen zu können, mit Hilfe eines - meist eine bloße Haltefunktion ausübenden - Adapters an das Hausgerät im Bereich der Beschickungstür angebracht werden. Es versteht sich von selbst, dass das externe Gerät auch von dem Adapter wieder gelöst werden kann, wenn es nicht mehr die Funktion eines Eingabe-Steuerungsteiles eines bzw. des in Rede stehenden Hausgerätes zu übernehmen braucht. Soweit das externe Gerät eine bindende Funktion für das Hausgerät übernimmt, muss auch für einen Datenaustausch zwischen dem externen Gerät und dem Hausgerät Sorge getragen werden. Dafür kann ein drahtloses Netzwerk bzw. ein WLAN, wie WiFi, ZigBee oder Bluetooth oder dergleichen dienen, mit Hilfe dessen auch die mittelbare Ankopplung an das Internet erfolgen kann. Es bietet sich dann an, dass eine Schnittstelle einerseits zu dem drahtlosen Netzwerk und andererseits zu dem Internet besteht. Die benannten Schnittstellen können von dem bereits erwähnten Router bzw. Gateway umfasst sein.

Der Eingabe-Steuerungsteil, der ein fester Einbau- Bestandteil des Hausgerätes ist, weist eine Kamera auf.

Die Kamera des Eingabe-Steuerungsteiles weist eine, für den Empfang eines breitbandigen Strahlenspektrums geeignete, Sensorik auf. Diese Sensorik liefert eine sehr komplexe, auch mehrdimensionale Abbildung des Behandlungsgutes. Dazu kann auch beitragen, dass bei Berücksichtigung von Infrarotstrahlung, Temperaturprofile des Behandlungsgutes, auch zu dessen Identifizierung, berücksichtigt werden können. Um daraus eine einigermaßen sichere Erkennung des Behandlungsgutes zu erreichen sind rechenintensive Vorgänge auszuführen, wozu ein geeignetes technisches Programm zu verwenden ist. Dieses Programm wird in die Speicherplätze des rechnerartigen Ergänzungs-Steuerungsteiles geladen, insbesondere eines über das Internet ankoppelbaren Servers. Soweit es sich um keine ganz so rechenintensiven Vorgänge handelt, ist es auch möglich, das Programm in die Speicherplätze des externen Gerätes bzw. des mobilen Endgerätes zu laden.

Somit wird erreicht, dass die durch Sensorik erzielbare Abbildung des Behandlungsgutes durch Zusammenwirken insbesondere des Basis-Steuerungsteiles und des rechnerartigen Ergänzungs-Steuerungsteiles zu dem Ergebnis führt, dass das Behandlungsgut Gattungs- und Zustands- bezogen identifizierbar ist. In Folge davon ist es möglich, das Behandlungsgut in dem Hausgerät automatisch oder teilautomatisch zu behandeln, also die erforderlichen Behandlungsschritte auszuführen.

Bei dem Hausgerät nach der Erfindung handelt es sich beispielweise um eine Waschmaschine, einen Waschtrockner, einen Wäschetrockner, eine Geschirrspülmaschine, ein Gargerät, ein Kühlgerät oder dergleichen.

In verfahrensmäßiger Hinsicht ist nach der Erfindung vorgesehen, dass folgende Schritte ausführt werden: Erkennen des in das Hausgerät eingeführten Behandlungsgutes bezüglich seiner Gattung und seines Zustandes mit Hilfe des Ergänzungs-Steuerungsteils und einer Kamera, wobei ferner vorgesehen ist, dass a) die Dimension des Behandlungsgutes durch die Kamera sensorisch erfasst wird, dass b) die Oberfläche des Behandlungsgutes durch die Kamera sensorisch erfasst wird, dass aus den Teilschritten a) und b) die Behandlungsschritte für das Behandlungsgut in dem Hausgerät ermittelt werden und daraus folgend ausgeführt werden.

Sieht das Verfahren vor, dass das Hausgerät teilautomatisch betrieben werden soll, so wird vorgesehen, einer Bedienungsperson des Hausgerätes eine leicht erfassbare Auswahl von alternativen Eingaben zur Verfügung zu stellen.

Soweit die Erfindung durch auf die unabhängigen Ansprüche rückbezogene, nicht selbständige Ansprüche weitergebildet wird, so soll es so sein, dass eine zunächst angegebene Kette von Rückbeziehungen nicht einschränkend in Bezug auf die insgesamt mitgeteilte Lehre zu sehen ist, soweit auch andere Kombinationen von Merkmalen von Ansprüchen sich als geeignet und ausführbar aus Sicht des Fachmanns ergeben.

Im Folgenden wird die Erfindung anhand von Ausführungsbeispielen schematisch genauer beschrieben. Gleiche Bezugszeichen zeigen gleiche oder vergleichbare Teile. Die Figuren werden zunächst kurz erläutert.
Fig. 1 zeigt in schematischer Darstellung eine Ansicht eines Hausgerätes mit zugehöriger, ebenfalls schematischer, Darstellung von Steuerungsblöcken;
Fig. 2 zeigt in schematischer Übersichts- Darstellung eine weitere Ansicht eines Hausgerätes mit Hervorhebung eines externen Gerätes und einer Internetanbindung und
Fig. 2A zeigt im Zusammenhang mit Fig. 2 eine schematische Darstellung zu einem vom externen Gerät umfassten Steuerungsblock.

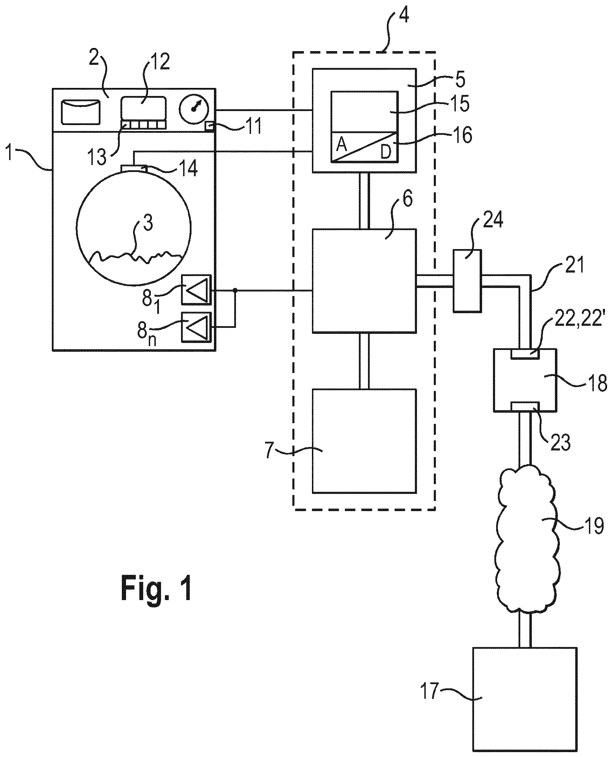

In Fig. 1 ist zunächst ein beliebiges Hausgerät 1 dargestellt. Es kann sich beispielsweise um eine Waschmaschine handeln. Das Hausgerät 1 weist eine als Bedienblende ausgebildete Eingabeanordnung 2 auf, die mit einem nachfolgend zu erläuternden Eingabe-Steuerungsteil 5 in Verbindung steht. Im Hausgerät 1 ist durch eine Beschickungstür (ohne Bezugszeichen) ein Behandlungsgut 3, wie Wäsche, eingebracht, das zu behandeln ist, wozu eine Abfolge von Behandlungsschritten erforderlich ist, um ein gutes Behandlungsergebnis in Bezug auf das Behandlungsgut zu erzielen. Handelt es sich um Wäsche, so soll diese am Ende der Behandlung verschmutzungsfrei sein und eine geringe Restfeuchte aufweisen. Die erforderlichen Behandlungsschritte werden durch eine Steuerung 4 ausgelöst, die auf eine Reihe von Leistungsstufen 8₁ bis 8ₙ ansteuert, worunter sich beispielsweise ein Antriebsmotor für eine Waschtrommel oder auch eine Heizung zum Erwärmen von Waschlauge befinden kann. Die Steuerung 4 umfasst neben dem bereits erwähnten Eingabe-Steuerungsteil 5 einen Basis-Steuerungsteil 6 und einen rechnerartigen Ergänzungs-Steuerungsteil 7. Der Ergänzungs-Steuerungsteil 7 ist für die sehr rechenintensiven Prozeduren vorgesehen, die bei der Gattungs- und Zustands- bezogen Erkennung des Behandlungsgutes 3 ausgeführt werden. Die Steuerung 4 wird somit in die Lage versetzt, mit den Steuerungsteilen 5 bis 7 einen selbsttätigen Behandlungsablauf des Behandlungsgutes ausführen zu können.

Wird ein Behandlungsablauf so durchgeführt, dass keine weitere Auswahl durch eine Bedienungsperson an der Bedienblende 2 vorzunehmen ist, so handelt es sich um einen vollautomatischen Ablauf der Behandlungsschritte. Die Bedienungsperson braucht daher nur eine Startaste 11, die im Bereich der Bedienblende vorgesehen ist, zu betätigen.

Wird jedoch davon ausgegangen, dass die Bedienungsperson doch in gewissem Maße auf einen Ablauf von Behandlungsschritten Einfluss nehmen möchte, so liegt ein teilautomatischer Ablauf von Behandlungsschritten vor. Dafür ist die Bedienblende 2 beispielsweise mit weiteren Anzeigen und Eingaben versehen. Für Anzeigen wird bevorzugt ein Display 12 und für Eingaben werden bevorzugt Displaytasten 13 vorgesehen. Es können jedoch auch andere beliebig ausgebildete Tasten vorgesehen werden. Die Philosophie einer Teilautomatik besteht darin, dass eine Bedienungsperson aktiv in den Prozess der Vorbereitung für den Ablauf der Behandlung des Behandlungsgutes eingebunden ist, ohne durch eine zu große Auswahl verschiedenenartiger Eingabemöglichkeiten überfordert zu sein. Die Akzeptanz im Umgang mit einem so ausgebildeten Hausgerät steigt erheblich.

Der Eingabe-Steuerungsteil 5 weist auch mittelbar eine Kamera 14 auf. Diese Kamera 14 ist im Bereich der Beschickungsöffnung (ohne Bezugszeichen) des Hausgerätes 1 anzubringen. Der Strahlengang der Kamera 14 liefert ein Abbild des Behandlungsgutes. Dies kann auch mehrdimensional sein, wobei es dann vorteilhaft ist, wenn die Basis der Kamera verändert wird. Es kann auch eine Abbildung mit verschiedenen Brennweiten der Kamera 14 berücksichtigt werden. Das vom Behandlungsgut gewonnene Abbild bzw. mehrere dieser Abbildungen werden von einer Sensorik 15, wie fotoempfindlichen Arrays, in Bildelemente bzw. Pixels und in Folge davon in elektronische Signale umgesetzt, die mit einem Digitalisierer 16 digitalisiert werden und somit digital verarbeitbar sind. Die Ausgangsdaten des Digitalisierers 16 können über den Basis-Steuerungsteil 6 bzw. über eine innerhalb der Steuerung 4 befindliche Busleitung (ohne Bezugszeichen) an den rechnerartigen Ergänzungs-Steuerungsteil 7 geleitet werden. Mittels der somit möglichen, sehr vielen rechnergestützten Verarbeitungszyklen, gelingt es, das Behandlungsgut sehr genau erkennen zu können, so dass ein vollautomatischer oder ein teilautomatischer Behandlungsablauf des Behandlungsgutes ausführbar ist.

Sollte es jedoch nicht mehr möglich sein, einen rechnerartigen Ergänzungssteuerungsteil 7, also letztlich einen Rechner oder Server ausreichender Kapazität (Datenbreite und Rechengeschwindigkeit), innerhalb des Hausgerätes 1 bzw. innerhalb der Steuerung 4 unterbringen zu können, so wird in bevorzugter Abänderung nach einer Weiterbildung der Erfindung vorgesehen, dass anstatt des Ergänzungssteuerungsteiles 7 ein Server 17, der mittelbar über das Internet ankoppelbar ist, zu verwenden. Eine Ankopplung an das Internet kann über ein beliebiges physikalisches Übertragungsprinzip und ein darauf aufbauendes Protokoll erfolgen. Ausgehend von einem Router bzw. Gateway 18 wird die Verbindung zum Internet hergestellt.

Es bietet sich ohne Weiteres an, eine Datenleitung 21 zwischen Steuerung 4, bzw. dem die Steuerungsteile 5 und 6 verbindenden Datenbus und dem Router 18 vorzusehen, die drahtgebunden sein kann. Diese Datenleitung 21 führt zur Eingangsschnittstelle 22 des Routers 18. Die Ausgangsschnittstelle 23 des Routers 18 ermöglicht die Verbindung zum Internet 19.

Es ist selbstverständlich auch möglich, die Datenleitung 21 drahtlos auszuführen, also ein drahtloses Netzwerk oder WLAN, wie WiFi, ZigBee oder Bluetooth, einzusetzen. Dann wird noch ein Anpassungsnetzwerk 24 benötigt, um den Datenaustausch entsprechend dem drahtlosen Übertragungsstandard vornehmen zu können. Auch eine entsprechend angepasste Schnittstelle 22' des Routers 18 muss diesem Übertragungsstandard entsprechen.

In weiterer Abänderung der Erfindung ist es möglich, den Eingabe-Steuerungsteil 5 nicht mehr fest zugeordnet zu dem Hausgerät 1 zu vorzusehen. Es wird ein externes Gerät 25, auf das nachfolgend eingegangen wird, vorgesehen, das mindestens die Funktion des Eingabe-Steuerungsteils 5 übernimmt.

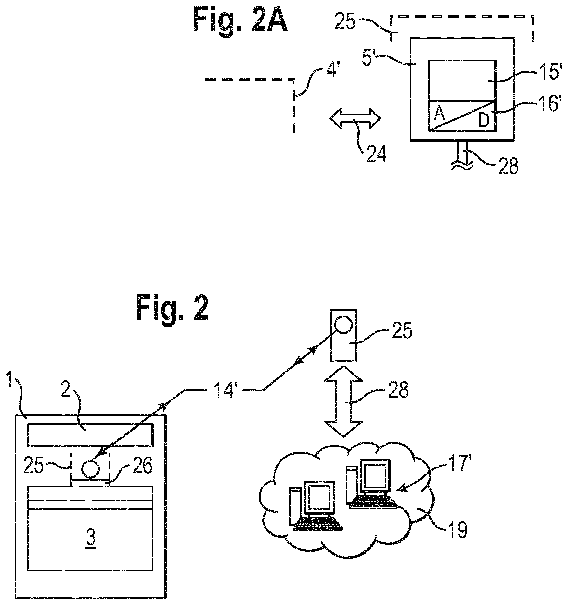

Dazu wird zunächst auf die Übersichtsdarstellung nach Fig. 2 verwiesen. Ein Hausgerät 1, das beispielsweise ein Backofen sein kann, wird im Bereich von dessen Beschickungstür (ohne Bezugszeichen) mit einem Adapter 26 versehen, der das externe Gerät 25 aufnehmen kann, so dass eine Kamera 14' des externen Gerätes 25, wenn es an dem Adapter 26 angebracht ist, eine Abbildung des Behandlungsgutes 3 vornehmen kann. Das externe Gerät 25 ist bevorzugt über ein drahtloses, mit Doppelpfeil 27 dargestelltes, Netzwerk mit der weiteren Steuerung 4' des Hausgerätes 1 verbunden, wozu auch auf die Fig. 2A verwiesen wird. Diese weitere Steuerung 4' kann der bereits erläuterten konventionellen Steuerung 4 des Hausgerätes 1 entsprechen, die immer dann ihre - konventionelle - Funktion übernimmt, wenn das externe Gerät 25 sich nicht im Datenaustausch mit dieser Steuerung befindet . Es kann jedoch auch vorgesehen sein, dass ausgehend von dem Adapter 26 eine drahtgebundene Verbindung mit dem Hausgerät 1 besteht, wobei dann das Vorhandensein des externen Gerätes durch eine Kontakt- ausgelöste Umschaltung erkannt wird.

Das externe Gerät 25 weist auch eine, entsprechend der erfolgten Darstellung mit Doppelpfeil, mittelbare Verbindung mit dem Internet 19 auf, so dass auf die Rechenkapazität mindestens eines im Internet 19 bzw. in der "Cloud" befindlichen Servers 17' zurückgegriffen werden kann und so die rechenintensive Erkennung des Behandlungsgutes 3 unterstützt wird.

Im Übrigen weist das externe Gerät 25, indem es einen Eingabesteuerungsteil 5' des Hausgerätes 1 substituiert, eine Kamera 14' eine Sensorik 15' und einen Digitalisierer 16' auf, wie dies die Fig. 2A zeigt. Wenn dann das externe Gerät 25 an dem Adapter 26 im Bereich der Beschickungstür (ohne Bezugszeichen) des Hausgerätes 1 angebracht ist und somit das in das Hausgerät 1 eingebrachte Behandlungsgut 3 erkannt wird, kann also die zuvor schon beschriebene Funktion des Hausgerätes 1, also eine Ausführung von erforderlichen Behandlungsschritten erfolgen, ohne dass es vielfältiger Eingaben - im Bereich der Bedienblende 2 des Hausgerätes 1 oder an dem externen Gerät 25 - durch eine Bedienungsperson bedarf. Die erfinderische Lehre, nämlich dass erforderliche Behandlungsschritte an dem erkannten Behandlungsgut selbsttätig, also vollautomatisch oder teilautomatisch, ausführbar sind, kommt also auch bei dieser alternativen Weiterbildung der Erfindung voll zur Geltung.

### Bezugszeichenliste

- 1: Hausgerät
- 2: Eingabeanordnung, Bedienblende
- 3: Behandlungsgut
- 4: Steuerung, auch 4'
- 5: Eingabe-Steuerungsteil, auch 5'
- 6: Basis-Steuerungsteil
- 7: rechnerartiger Ergänzungs-Steuerungsteil
- 8₁ bis 8ₙ: Leistungsstufen
- 11: Starttaste
- 12: Display
- 13: Displaytasten
- 14,14': Kamera
- 15,15': Sensorik
- 16,16': Digitalisierer
- 17, 17': Server
- 18: Router, Gateway
- 19: Internet
- 21: Datenleitung, auch 21'
- 22,22': Eingangsschnittstelle von Router 18
- 23: Ausgangsschnittstelle von Router 18
- 24: Anpassungsnetzwerk
- 25: externes Gerät
- 26: Adapter
- 27: drahtloses Netzwerk
- 28: mittelbare Verbindung mit dem Internet

## Patentansprüche

1. Hausgerät (1) für eine Behandlung eines Behandlungsguts (3), wobei das Hausgerät (1) eine Steuerung (4) zur Ausführung aller erforderlichen Behandlungsschritte zur Erreichung eines bestimmungsgemäßen Behandlungserfolges in Bezug auf das Behandlungsgut (3) aufweist und die Steuerung (4) dafür eingerichtet ist, die in Bezug auf das erkannte Behandlungsgut (3) erforderlichen Behandlungsschritte selbsttätig auszuführen, wobei die Steuerung (4) einen Eingabe-Steuerungsteil (5), einen Basis-Steuerungsteil (6) und einen rechnerartigen Ergänzungs-Steuerungsteil (7; 17; 17') umfasst, wobei beim Einbringen des Behandlungsgutes (3) in das Hausgerät (1) über einen Eingabe-Steuerungsteil (5) Informationen über das Behandlungsgut (3) in die Steuerung (4) des Hausgerätes (1) einlesbar sind, **dadurch gekennzeichnet, dass** der Eingabe-Steuerungsteil (5; 5') eine Kamera (14; 14') umfasst und der rechnerartige Ergänzungs-Steuerungsteil durch einen über das Internet ankoppelbaren Server (17; 17') realisiert ist sowie dafür eingerichtet ist, aufgrund einer durch die Kamera (14; 14') erzielbaren Abbildung des Behandlungsgutes (3) das Behandlungsgut (3) über den Eingabe-Steuerungsteil (5) gattungs- und zustandsbezogen zu identifizieren.

2. Hausgerät (1) nach einem der vorhergehenden Ansprüche, **dadurch gekennzeichnet, dass** die Kamera (14; 14'), eine, für den Empfang eines breitbandigen Strahlenspektrums geeignete, Sensorik (15; 15') aufweist.

3. Hausgerät (1) nach einem der vorhergehenden Ansprüche, **dadurch gekennzeichnet, dass** das rechnerartige Ergänzungs-Steuerungsteil (7; 17; 17') ein technisches Programm umfasst.

4. Hausgerät (1) nach einem der vorhergehenden Ansprüche, **dadurch gekennzeichnet, dass** das Hausgerät (1) eine Waschmaschine (1), ein Waschtrockner (1), ein Wäschetrockner (1), eine Geschirrspülmaschine (1), ein Gargerät (1) oder ein Kühlgerät (1) ist.

5. Verfahren zum Betreiben eines Hausgerätes (1) nach einem der vorhergehenden Ansprüche, mit einer Steuerung (4) des Hausgerätes (1), mit einem Eingabe-Steuerungsteil (5), einem Basis-Steuerungsteil (6) sowie einem rechnerartigen Ergänzungs-Steuerungsteil (7; 17; 17'), wobei dieser ein über das Internet zuschaltbarer Rechner (17, 17') ist, **dadurch gekennzeichnet, dass** folgende Schritte ausführt werden:
• Erkennen des in das Hausgerät (1) eingeführten Behandlungsgutes (3) bezüglich seiner Gattung und seines Zustandes mit Hilfe des Ergänzungs-Steuerungsteils (17; 17') und einer Kamera (14; 14'), wobei ferner vorgesehen ist,
• dass a) die Dimension des Behandlungsgutes (3) durch die Kamera (14; 14') sensorisch erfasst wird,
• dass b) die Oberfläche des Behandlungsgutes (3) durch die Kamera (14; 14') sensorisch erfasst wird,
• dass aus den Teilschritten a) und b) die Behandlungsschritte für das Behandlungsgut (3) in dem Hausgerät (1) ermittelt werden und daraus folgend ausgeführt werden.

## Claims

1. Household appliance (1) for treating an item to be treated (3), wherein the household appliance (1) has a controller (4) for carrying out all necessary treatment steps for achieving an intended treatment success in relation to the item to be treated (3) and the controller (4) is configured for autonomously carrying out the necessary treatment steps in relation to the identified item to be treated (3), wherein the controller (4) comprises an input controller part (5), a base controller part (6) and a computer-like expansion controller part (7; 17; 17'), wherein when the item to be treated (3) is introduced into the household appliance (1), information about the item to be treated (3) can be read into the controller (4) of the household appliance (1) via an input controller part (5), **characterised in that** the input controller part (5; 5') comprises a camera (14; 14') and the computer-like expansion controller part is realised by a server (17; 17') that can be coupled via the Internet and is also configured for identifying the item to be treated (3) in terms of type and status via the input controller part (5) on the basis of a mapping of the item to be treated (3) which can be achieved by the camera (14; 14').

2. Household appliance (1) according to one of the preceding claims, **characterised in that** the camera (14; 14') has a sensor system (15; 15') that is suitable for receiving a broadband radiation spectrum.

3. Household appliance (1) according to one of the preceding claims, **characterised in that** the computer-like expansion controller part (7; 17; 17') comprises a technical program.

4. Household appliance (1) according to one of the preceding claims, **characterised in that** the household appliance (1) is a washing machine (1), a washer-dryer (1), a tumble dryer (1), a dishwasher (1), a cooking appliance (1) or a refrigeration appliance (1).

5. Method for operating a household appliance (1) according to one of the preceding claims, with a controller (4) of the household appliance (1), with an input controller part (5), a base controller part (6) as well as a computer-like expansion controller part (7; 17; 17'), wherein the latter is a computer (17; 17) that can be connected via the Internet, **characterised in that** the following steps are carried out:
• identifying the item to be treated (3) introduced into the household appliance (1) in terms of its type and its status with the aid of the expansion controller part (17; 17') and a camera (14; 14'), wherein it is further provided
• that a) the dimension of the item to be treated (3) is recorded by sensors by way of the camera (14; 14'),
• that b) the surface of the item to be treated (3) is recorded by sensors by way of the camera (14; 14'),
• that the treatment steps for the item to be treated (3) in the household appliance (1) are ascertained from the substeps a) and b) and are consequently carried out.

## Revendications

1. Appareil ménager (1) pour un traitement d'un article à traiter (3), dans lequel l'appareil ménager (1) présente une commande (4) pour l'exécution de l'ensemble des étapes de traitement nécessaires à l'atteinte d'un résultat de traitement conforme en relation avec l'article à traiter (3) et la commande (4) est conçue afin d'exécuter de façon automatique les étapes de traitement nécessaires en rapport avec l'article à traiter (3) reconnu, dans lequel la commande (4) comprend une partie de commande pour la saisie (5), une partie de commande de base (6) et une partie de commande complémentaire de type calculateur (7 ; 17 ; 17'), dans lequel lors de l'introduction de l'article à traiter (3) dans l'appareil ménager (1), des informations au sujet de l'article à traiter (3) peuvent être mémorisées dans la commande (4) de l'appareil ménager (1) via une partie de commande pour la saisie (5), **caractérisé en ce que** la partie de commande pour la saisie (5 ; 5') comprend une caméra (14 ; 14') et la partie de commande complémentaire de type calculateur est réalisée par le biais d'un serveur accouplable via Internet (17 ; 17') et conçue afin d'identifier, sur la base d'une image du bien à traiter (3) que la caméra (14 ; 14') permet d'obtenir, l'article à traiter (3) quant à son genre et à son état, via la partie de commande pour la saisie (5).

2. Appareil ménager (1) selon l'une des revendications précédentes, **caractérisé en ce que** la caméra (14 ; 14') présente une technologie de capteurs (15 ; 15') appropriée pour la réception d'un spectre de rayonnement à large bande.

3. Appareil ménager (1) selon l'une des revendications précédentes, **caractérisé en ce que** la partie de commande complémentaire de type calculateur (7 ; 17 ; 17') comprend un programme technique.

4. Appareil ménager (1) selon l'une des revendications précédentes, **caractérisé en ce que** l'appareil ménager (1) est un lave-linge (1), un lave-linge séchant (1), un sèche-linge (1), un lave-vaisselle (1), un appareil de cuisson (1) ou un un appareil frigorifique (1).

5. Procédé d'exploitation d'un appareil ménager (1) selon l'une des revendications précédentes, avec une commande (4) de l'appareil ménager (1), avec une partie de commande pour la saisie (5), une partie de commande de base (6) et une partie de commande complémentaire de type calculateur (7 ; 17 ; 17'), dans lequel celle-ci est un calculateur commutable via Internet (17, 17'), **caractérisé en ce que** les étapes suivantes sont exécutées :
• reconnaissance de l'article à traiter (3) introduit dans l'appareil ménager (1) quant à son genre et à son état à l'aide de la partie de commande complémentaire (17 ; 17') et d'une caméra (14 ; 14'), qui est en outre prévue,
• que a) la caméra (14 ; 14') saisisse par capteurs la dimension de l'article à traiter (3),
• que b) la caméra (14 ; 14') saisisse par capteurs la surface de l'article à traiter (3),
• que les étapes de traitement pour l'article à traiter (3) dans l'appareil ménager (1) soient déterminées à partir des étapes partielles a) et b) et ensuite exécutées.
